# EUROPEAN PATENT APPLICATION

(11) **EP 2 104 273 A1**
(43) Date of publication of application: **23.09.2009**
(21) Application number: 06828421.5
(22) Date of filing: 21.12.2006
(51) Int. Cl.: H04L 12/24

(54) **A METHOD AND APPARATUS FOR VERIFYING CONNECTIVITY OF A DATA**

(71) Applicant: ZTE Corporation, Shenzhen, Guangdong 518057 (CN)
(72) Inventor: XIANG, Qimin, Guangdong 518057 (CN); KE, Ming, Guangdong 518057 (CN)
(74) Representative: Ilgart, Jean-Christophe
(86) International application number: PCT/CN2006/003527
(87) International publication number: WO 2008/074192

(57) **Abstract**

The present invention provides a method and a device for verifying data connectivity, which can be used to verify data connectivity in the process of layer adjacency discovery of ASON. The method comprising: reconstructing the trace message object in the SDH coding of a link management protocol Test Message, to make a Trace Message therein to carry information of trace type; when the layer adjacency discovery is in process, a trace agent of a control plane that actively initiate the layer adjacency, constructs the trace message object according to the layer network to be discovered, and transmits the Trace Message carrying the trace message object to a transport plane, to require the transport plane to conduct transmission in a predetermined form by a trace byte; when receiving the Trace Message, a receive port of layer adjacency of the transport plane conducts different processes according to the trace type carried in the Trace Message.

## Description

### Technical field

The present invention relates to the field of optical network, especially to a method and device for verifying data connectivity in the process of automatic switched optical network (ASON for short) layer adjacency discovery.

### Background of the invention

In the field of telecommunication, optical networks such as Optical transport network (OTN for short), Wavelength-division multiplexing (WDM for short), Synchronous digital hierarchy (SDH for short), Synchronous optical network (SONET for short) and etc. have found broad application.

ASON has become the research hotspot in the field of optical network in recent years. The concept of ASON was brought forward in the suggestion of ITU-TG.8080 and the function of ASON is achieved by setting a special Control plane (CP for short). The achievement framework of automatic discovery of ASON transport entity is prescribed in the suggestions of ITU-TG.7714 and ITU-TG.7714.1 of ITU-T (International Telecommunication Union), which provides an achievement criterion for adjacency discovery of transport entity. The achievement of automatic discovery of ASON transport entity is further described in the suggestions of RFC4204 (Link Management Protocol, LMP for short) and RFC4207 (LMP Test Messages Encoding for Synchronous Digital Hierarchy (SDH) Network) of Internet Engineering Task Force (IETF).

At present, according to G.7714.1 and RFC4207, when verifying data connectivity in the process of layer adjacency discovery, the J0 byte or DCC byte (D1-D3) of a regenerator section layer is prescribed to be used in the regenerator section layer, the DCC byte (D4-D12) of a multiplex section layer is prescribed to be used in the multiplex section layer, the J1 byte is prescribed to be used in high-order VC, and the J2 byte is prescribed to be used in low-order VC.

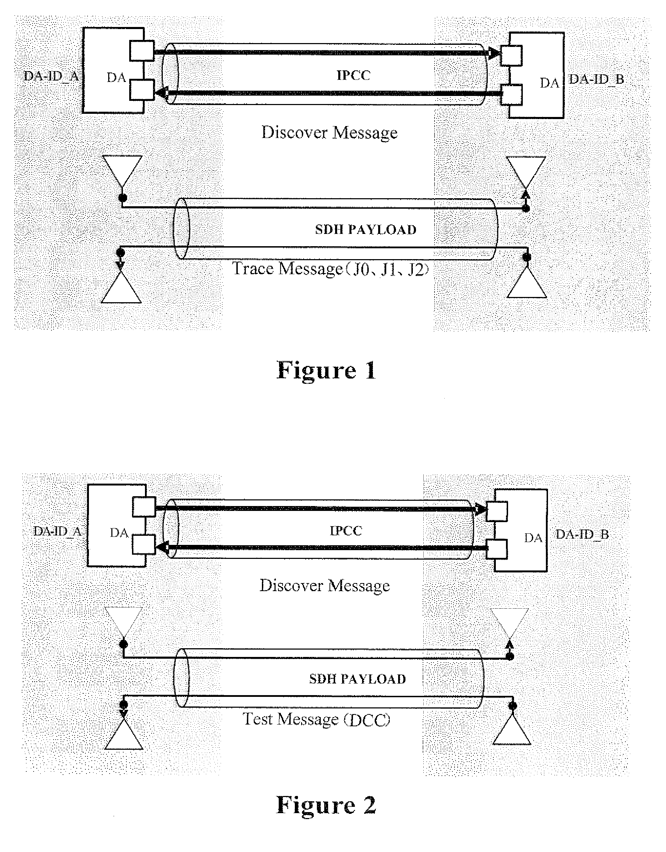

Figure 1 is a schematic illustration of verifying data connectivity by using the Jx byte in the process of layer adjacency discovery of ASON at present; figure 2 is a schematic illustration of verifying data connectivity by using the DCC byte in the process of layer adjacency discovery of ASON at present.

As shown in figure 1, when the Jx byte is adopted in the transport mechanism, the process of layer adjacency discovery is as follows:
DA (Discover Agent, hereafter referred to active node DA for short) groupware of a control plane, which actively initiates the layer adjacency discovery, interacts with an adjacent DA (hereafter passive node DA for short) via the 701 port of UDP protocol in the control channel, notifies the beginning of the process of layer adjacency discovery, and then the active node DA sends a message carrying trace message object to the transport plane, to require the transport plane to transmit a Trace Messages in the appointed data link. After the Trace Message was transmitted in the appointed data link by the transport plane (the transport plane carries the Trace Messages through a trace identification Jx byte in the data link), the active node DA sends a Test Message carrying a Trace Message via the 701 port of UDP protocol in the control channel, to require the passive node DA to verify data connectivity. After receiving the Test Message, the passive node DA acquires the Trace Message carried therein, and compares it with the Trace Message received from the data link, so as to verify connectivity of the data link.

As shown in figure 2, when the DCC byte is adopted in the transport mechanism, the process of layer adjacency discovery is as follows:
DA (Discover Agent, hereafter referred to active node DA for short) groupware of a control plane, which actively initiates the layer adjacency discovery, interacts with an adjacent DA (hereafter passive node DA for short) via the 701 port of UDP protocol in the control channel, notifies the beginning of the process of layer adjacency discovery, and then the active node DA requires the transport plane to send a Test Message through the UDP protocol in the appointed data link (the transport plane carries a Trace Message through the DCC byte in the data link). After receiving the Test Message, the passive node DA search the data link corresponding to the transport plane according to interface index used to receive the Test Message, so as to verify connectivity of the data link.
As described above, there are following defects in the prior art:
   (1) The trace identification adaptation byte Jx can be used in the regenerator section layer, high-order VC and low-order VC, to verify data connectivity, while the DCC byte must be used in the multiplex section layer. The DCC byte is used as data channel of DCN (data communication network) in the SDH, while the Jx byte is used as trace identification adaptation in the SDH. So different transport mechanisms and verification procedures exist in the process of verifying data connectivity, which leads to complexity of achievement.
   (2) In the process of layer adjacency discovery, when the DCC byte is adopted in the transport mechanism, the Test Message for verifying data connectivity needs to be transmit via UDP in the appointed interface (in the appointed data link). But in TCP/IP protocol stack, transmission through the appointed interface is not the achievement method of the Standard Protocol. The existing protocol stack may need to be extended to transmit through the appointed interface, which induces achievement complexity and hidden trouble in interoperability of various manufactures.

### Summary of the invention

In view of the above problems, the present invention aims to provide a method and a device for verifying data connectivity in the process of layer adjacency discovery of ASON, wherein the Trace Message is extended and trace type is contained, therefore, the J0 byte can be used to verify data connectivity in the process of adjacency discovery both in the regenerator section layer and in the multiplex section layer.

To achieve the purpose described above, according to one aspect of the present invention, provides a verification method for verifying data connectivity in the process of layer adjacency discovery of ASON, comprising:
Step 502, reconstructing the trace message object in the SDH coding of a link management protocol Test Message, to make a Trace Message therein to carry information of trace type;
Step 504, when the layer adjacency discovery is in process, a trace agent of a control plane that actively initiate the layer adjacency, constructs the trace message object according to the layer network to be discovered, and transmits the Trace Message carrying the trace message object to a transport plane, to require the transport plane to conduct transmission in a predetermined form by a trace byte; and
Step 506, when receiving the Trace Message, a receive port of layer adjacency of the transport plane conducts different processes according to the trace type carried in the Trace Message.

Preferably, the trace message object is constructed by adding a new type to the trace type of the trace message object and using the Trace Message to carry the trace type.

Preferably, the trace type indicates that connectivity of a regenerator section layer is verified, and the following step is included in Step506:
the transport plane ends the transmission of the Trace Message, and the control plane verifies connectivity of the regenerator section layer according to the Trace Message.

Preferably, the trace type indicates that connectivity of a multiplex section layer is verified, and the following step is included in the Step506:
according to the type of the receive port, the transport plane and/or the control plane conduct different processes.

Preferably, the type of the receive port is ADM, and the transport plane and/or the control plane conduct different processes comprise: the transport plane ends the transmission of the Trace Message, and the control plane verifies connectivity of the multiplex section layer according to the Trace Message.

Preferably, the type of the receive port is REG, and the transport plane and/or the control plane conduct different processes comprise: the transport plane transmits the Trace Message to a corresponding downstream node directly.

Preferably, the predetermined form is 16-byte multi-frame.

Preferably, the trace byte is J0 byte of a regenerator section layer.

According to another aspect of the present invention, provides a verification device for verifying data connectivity in the process of layer adjacency discovery of ASON, comprising:
reconstructing unit, for reconstructing the trace message object in the SDH coding of a link management protocol Test Message, to make a Trace Message therein to carry information of trace type;
transmitting unit, located on a control plane that actively initiate the layer adjacency, for constructing the trace message object in the process of layer adjacency discovery according to a layer network to be discovered, and transmitting the Trace Message carrying the trace message object to a transport plane, to require the transport plane to conduct transmission in a predetermined form by a trace byte; and
processing unit, for conducting different processes according to the trace type carried in the Trace Message after the Trace Message is received at a receive port of layer adjacency of the transport plane.

Preferably, in the reconstructing unit, the trace message object is constructed by adding a new type to the trace type of the trace message object and using the Trace Message to carry the trace type.

Preferably, the processing unit further for: when the trace type indicates that connectivity of a regenerator section layer is verified, making the transport plane to ends the transmission of the Trace Message, and making the control plane to verify the connectivity of the regenerator section layer according to the Trace Message.

Preferably, the processing unit further for: when the trace type indicates that connectivity of a multiplex section layer is verified, making the transport plane and the control plane conduct different processes according to the type of the receive port.

Preferably, the processing unit further comprises a judging unit, for judging the type of the receive port, wherein the processing unit used for making the transport plane to ends the transmission of the Trace Message and making the control plane to verify connectivity of a multiplex section layer according to the Trace Message when the type of the receive port is ADM,; and the processing unit used for making the transport plane to transmit the Trace Message to a corresponding downstream node directly when the type of the receive port is REG.

Preferably, the predetermined form is 16-byte multi-frame.

Preferably, the trace byte is J0 byte of a regenerator section layer.

As described above, the present invention achieves the following technical effects: the hidden troubles in interconnection and intercommunication and complexity of achievement conduced by different transport mechanisms of the Test Message in the process of layer adjacency discovery in the prior art can be solved. Verification of data connectivity in the process of layer adjacency discovery of the regenerator section layer and the multiplex section layer of ASON can be achieved by the J0 byte. The transport mechanism and verification process of data verification can be unified and the process of layer adjacency discovery can be simpler and more effective.

Other features and advantages of the present invention will be stated in the following description, moreover, part of them will be obvious from the Description or understood by carrying out the present invention. The object and other advantages of the present invention can be achieved and obtained by structures specially indicated in the Description, claims and accompanying drawings.

### Description of the accompany drawings:

The appended drawings intend to help further understanding of the invention, and constitute part of the application. The illustrative embodiments of the invention and their description are used to explain the invention, and shall not be construed as improper limitations on the invention. In the appended drawings:
Figure 1 is a schematic view of verifying data connectivity by using the Jx byte in the process of layer adjacency discovery of ASON in the prior art;
Figure 2 is a schematic view of verifying data connectivity by using the DCC byte in the process of layer adjacency discovery of ASON in the prior art;
Figure 3 is a view of definition of trace message object in RFC4207;
Figure 4 is a flow chart of the method for verifying data connectivity in the process of layer adjacency discovery of ASON according to the embodiment of the present invention;
Figure 5 is a flow chart of the method for verifying data connectivity in the process of layer adjacency discovery of ASON according to the present invention;
Figure 6 is a schematic view of verifying data connectivity of the regenerator section layer or the multiplex section layer by using the J0 byte in the process of layer adjacency discovery, by the ADM interface, according to the embodiment of the present invention;
Figure 7 is a schematic view of verifying data connectivity of the regenerator section layer by using the J0 byte in the process of layer adjacency discovery, by the REG interface, according to the embodiment of the present invention;
Figure 8 is a schematic view of verifying data connectivity of the multiplex section layer by using the J0 byte in the process of layer adjacency discovery, by the REG interface, according to the embodiment of the present invention;
Figure 9 is a block diagram of the device for verifying data connectivity in the process of layer adjacency discovery of ASON according to the embodiment of the present invention.

### Embodiments

By way of example only, preferable embodiments of the present invention will be described in combination with the accompanying drawings as follows, and if not conflict, embodiments and technical features thereof can be combined.

In the embodiment of the present invention, the Trace Message and the Test Message are both messages defined in RFC4207 (SDH Encoding for LMP Test messages).

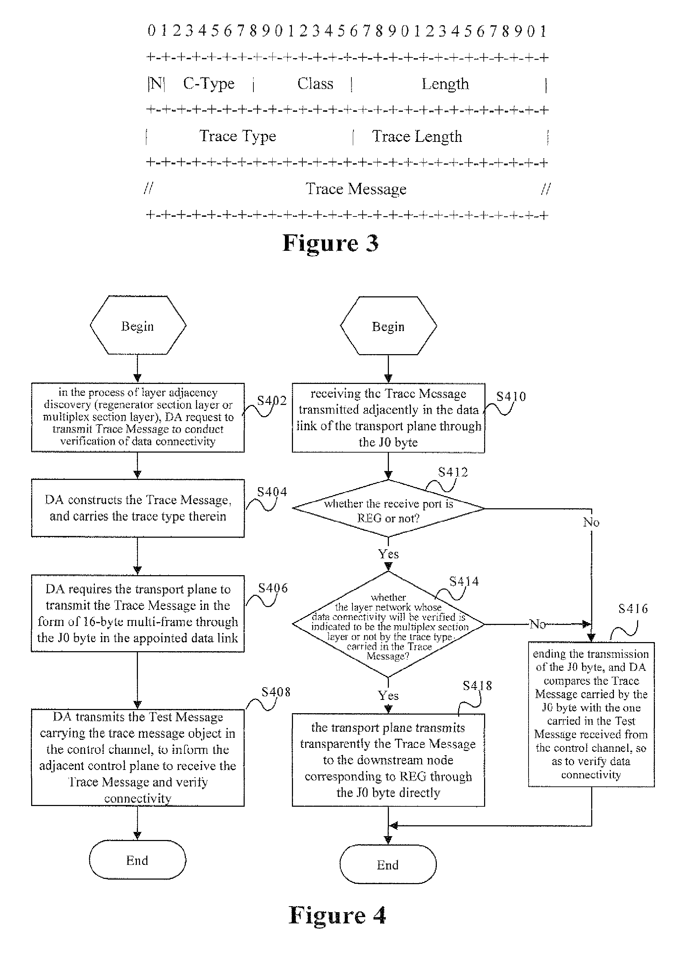

Figure 3 is a view of definition of trace message object in RFC4207. The definition of trace message object in RFC4207 will be explained in detail with reference to figure 3 as follows.

As shown in figure 3, Trace Type represents the type of Trace Message, which is defined as follows:
1 = SONET Section Trace ( J0 Byte )
2 = SONET Path Trace ( J1 Byte )
3 = SONET Path Trace ( J2 Byte )
4 = SDH Section Trace ( J0 Byte )
5 = SDH Path Trace ( J1 Byte )
6 = SDH Path Trace ( J2 Byte )

Trace Message represents the message expected to be received in band (data link) in the process of connectivity verification.

The definition of Trace Message and Test Message in RFC4207 is as follows:

```
 <Test Message>:: = <Common Header> <LOCAL_INTERFACE_ID>
                                   <VERIFY_ID> <TRACE>
```

It needs to be explained that the embodiment of the present invention is on the basis of LMP (in accordance with RFC4024 and RFC4207), wherein Trace Message can carry identification of trace type, in this way, the J0 byte can be used for verifying data connectivity in the process of layer adjacency discovery of the multiplex section layer.

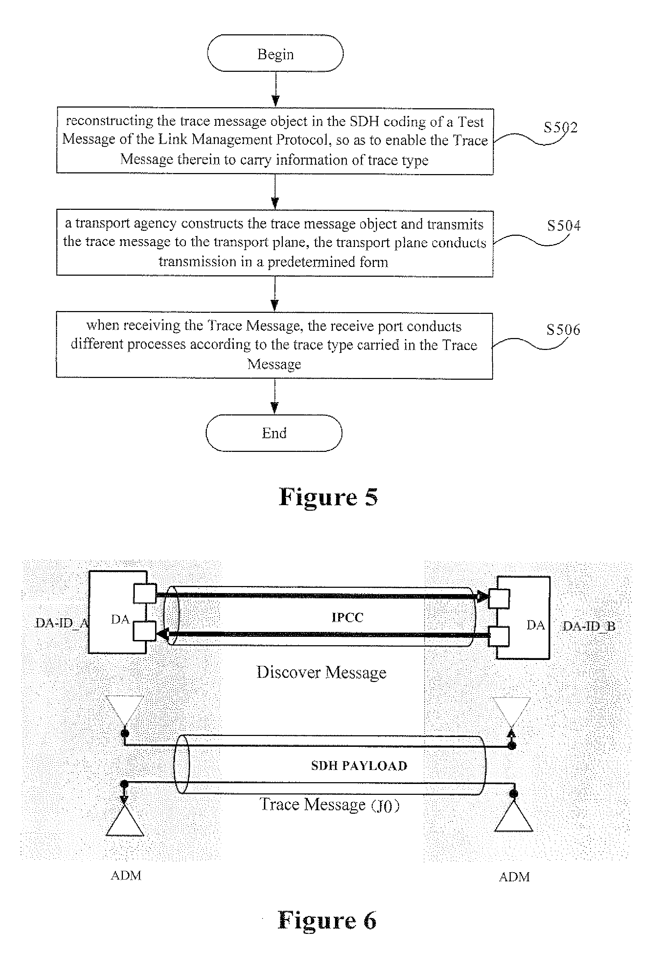

The method for verifying data connectivity in the process of layer adjacency discovery of ASON as shown in figure 5 will be described in detail in combination with figures 4 and 6-8 as follows. In the present embodiment, ASON comprises a plurality of nodes, which are connected with each other by data link. Additionally, a control plane is also introduced in ASON (it is reminded that only automatic discovery groupware DA of the control plane is marked in the figures).

Preferably, in the process of layer adjacency discovery (regenerator section layer or multiplex section layer), DA request to transmit Trace Message to conduct verification of data connectivity, as can be seen form the Step 402 shown in figure 4.

As shown in figure 5, the method for verifying data connectivity in the process of layer adjacency discovery of ASON comprises the following steps: Step 502 - Step 510, wherein:
Step 502, reconstructing the trace message object in the SDH coding of a Test Message of the Link Management Protocol, so as to enable the Trace Message therein to carry information of trace type. In the present embodiment, the Step502 refers to modify the trace message object in RFC4207, so as to enable the Trace Message therein to carry information of layer network. The detailed method is as follows:
   (1) adding a new type to the trace type of the trace message object, as follows:
      7 = SDH Line Trace (J0 Byte)
   (2) when Trace Message of the trace message object is constructed, carrying the trace type therein.

In Step 504, in the process of layer adjacency discovery, a trace agent of the control plane that actively initiate layer adjacency constructs a trace message object according to the layer network to be found, and sends the Trace Message carrying the trace message object to the transport plane, to require the transport plane to conduct transmission in a predetermined form through the trace byte, the Step 504 corresponds to Step 404, Step 406 and Step 408 shown in figure 4:
Step 404, DA constructs a Trace Message, and carries the trace type in the Trace Message;
Step 406, DA requires the transport plane to transmit the Trace Message in the form of
16-byte multi-frame through the J0 byte in the appointed data link;
Step408, DA transmits the Test Message carrying the trace message object in the control channel, to inform the adjacent control plane to receive the Trace Message and verify connectivity.
Step 506, when receiving the Trace Message, the receive port of layer adjacency of the transport plane conducts different processes according to the trace type carried in the Trace Message, the Step 506 corresponding to Step 410- Step 418 shown in figure 4;
Step 410, receiving the Trace Message transmitted adjacently in the data link of the transport plane through the J0 byte;
Step 412, judging whether the type of the receive port is REG or not, if the type is REG, proceeding to Step 414, otherwise, proceeding to Step 416;
Step 414, judging whether the layer network whose data connectivity will be verified is the multiplex section layer or not according to the trace type carried in the Trace Message; if it is not the multiplex section layer, proceeding to Step416, otherwise, proceeding to Step 418;
Step 416, ending the transmission of the J0 byte, and DA compares the Trace Message carried by the J0 byte with the one carried in the Test Message received from the control channel, so as to verify data connectivity;
Step 418, the transport plane transmits transparently the Trace Message to the downstream node corresponding to REG through the J0 byte directly.

In this way, the verification of data connectivity in the process of layer adjacency discovery of ASON is achieved.

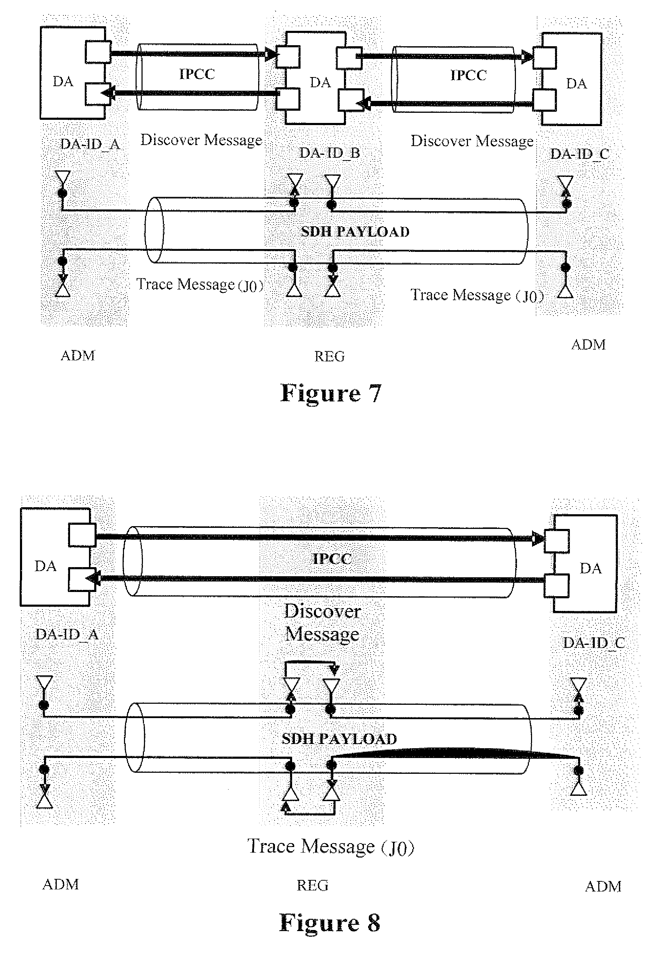

The embodiment of the present invention will be further described with reference to figures 6-8. Wherein, figure 6 is a schematic view of verifying data connectivity of the regenerator section layer or the multiplex section layer by using the J0 byte in the process of layer adjacency discovery, by the ADM interface, according to the embodiment of the present invention; figure 7 is a schematic view of verifying data connectivity of the regenerator section layer by using the J0 byte in the process of layer adjacency discovery, by the REG interface, according to the embodiment of the present invention; figure 8 is a schematic view of verifying data connectivity of the multiplex section layer by using the J0 byte in the process of layer adjacency discovery, by the REG interface, according to the embodiment of the present invention.

As shown in figure 6 and figure 7, when the Trace Message carried by the J0 byte represents that the connectivity of the regenerator section layer is verified, the transport plane ends the transmission of the Test Message, and the control plane can verify connectivity of the regenerator section layer according to the Trace Message carried by the J0 byte received.

When the Trace Message carried by the J0 byte represents that the connectivity of the multiplex section layer is verified, as shown in figure 6, if the type of the receive port is ADM, the transport plane ends the transmission of the Test Message, and the control plane may verify connectivity of the multiplex section layer according to the Trace Message carried by the J0 byte received. As shown in figure 8, if the type of the receive port is REG, the transport plane directly transmits the Trace Message by the J0 byte to the corresponding downstream node.

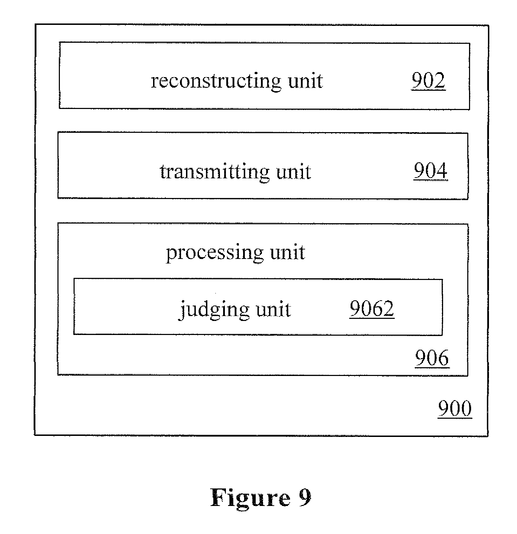

Figure 9 is a block diagram of device 900 for verifying data connectivity in the process of layer adjacency discovery of ASON according to the present invention.

As shown in figure 9, the device 900 for verifying data connectivity in the process of layer adjacency discovery of ASON comprises: reconstructing unit 902, for reconstructing the trace message object in SDH coding of the Test Message of the Link Management Protocol, to enable the Trace Message therein to carry information of the trace type; transmitting unit 904, located on the control plane that actively initiating layer adjacency, for constructing trace message object (i.e. trace message object) according to the layer network to be discovered in the process of layer adjacency discovery, and transmitting the Trace Message carrying the trace message object to the transport plane, to require the transport plane to conduct transmission in a predetermined form by the trace byte; and processing unit 906, for conducting different processes according to the trace type carried in the Trace Message after the Trace Message is received at the receive port of layer adjacency of the transport plane, wherein the processing unit 906 further comprises judging unit 9062, for judging the type of the receive port. If the type of the receive port is ADM, the processing unit can be used to make the transport plane end the transmission of the trace message and make the control plane to verify connectivity of the multiplex section layer according to the Trace Message. If the type of the receive port is REG, the processing unit can be used to make the transport plane to transmit the Trace Message to the corresponding downstream node directly.

Additionally, the processing unit 906 can be further used for: when the trace type represents that the connectivity of the regenerator section layer is verified, making the transport plane to end the transmission of the Trace Message, and making the control plane to verify connectivity of the regenerator section layer according to the Trace Message; when the trace type represents that the connectivity of the multiplex section layer is verified, making the transport plane and the control plane to conduct different processes according to the type of the receive port.

In the reconstructing unit 902, the construction of the trace message object is achieved by adding a new type to the trace type of the trace message object, and using the Trace Message to carry the trace type.

Additionally, it needs to be pointed out that, preferably, the predetermined form is 16 byte multi-frame and the trace byte is the J0 byte of the regenerator section layer.

Additionally, the embodiments of the present invention also provides a computer system to perform the method for verifying data connectivity in the process of layer adjacency discovery of ASON as described above with reference to any one of figures 4-8.

Further, a computer program product for verifying data connectivity in the process of layer adjacency discovery of ASON is also provided according to the embodiments of the present invention, which computer program product comprises instructions for causing a processor to perform the steps or processes described above with reference to any one of figures 4-8.

It can be seen from the above description that the present invention achieves the following technical effects: by carrying the trace type in the Trace Message and extending the Trace Message, the J0 byte can be used to verify data connectivity in the process of adjacency discovery of both the regenerator section layer and the multiplex section layer. Additionally, the present invention solves the problem of achievement complexity induced by different transport mechanisms of Test Message in the process of layer adjacency discovery and hidden troubles of interconnection and intercommunication in the prior art, unifies the transport mechanism (trace identification adaptation Jx byte) and verification process in the process of data verification and makes the process of layer adjacency discovery simpler and more effective.

The above is only preferable embodiment, which is not used to restrict the present invention. For those skilled in the art, the present invention may have various changes and variations. Any amendment, equivalent substitution, improvement and etc. within the spirit and principle of the present invention should be included in the scope of protection of the present invention.

## Claims

1. A verification method for verifying data connectivity in the process of layer adjacency discovery of ASON, **characterized in**, comprising:
Step 502, reconstructing the trace message object in the SDH coding of a link management protocol Test Message, to make a Trace Message therein to carry information of trace type;
Step 504, when the layer adjacency discovery is in process, a trace agent of a control plane that actively initiate the layer adjacency, constructs the trace message object according to the layer network to be discovered, and transmits the Trace Message carrying the trace message object to a transport plane, to require the transport plane to conduct transmission in a predetermined form by a trace byte; and
Step 506, when receiving the Trace Message, a receive port of layer adjacency of the transport plane conducts different processes according to the trace type carried in the Trace Message.

2. The verification method according to claim 1, **characterized in**, in the Step 504, the trace message object is constructed by adding a new type to the trace type of the trace message object and using the Trace Message to carry the trace type.

3. The verification method according to claim 1, **characterized in**, the trace type indicates that connectivity of a regenerator section layer is verified, and the following step is included in Step506:
the transport plane ends the transmission of the Trace Message, and the control plane verifies connectivity of the regenerator section layer according to the Trace Message.

4. The verification method according to claim 1, **characterized in**, the trace type indicates that connectivity of a multiplex section layer is verified, and the following step is included in the Step506:
according to the type of the receive port, the transport plane and/or the control plane conduct different processes.

5. The verification method according to claim 4, **characterized in**, the type of the receive port is ADM, and the transport plane and/or the control plane conduct different processes comprise: the transport plane ends the transmission of the Trace Message, and the control plane verifies connectivity of the multiplex section layer according to the Trace Message.

6. The verification method according to claim 4, **characterized in**, the type of the receive port is REG, and the transport plane and/or the control plane conduct different processes comprise: the transport plane transmits the Trace Message to a corresponding downstream node directly.

7. The verification method according to claim 1, **characterized in**, the predetermined form is 16-byte multi-frame.

8. The verification method according to claim 1, **characterized in**, the trace byte is J0 byte of a regenerator section layer.

9. A verification device for verifying data connectivity in the process of layer adjacency discovery of ASON, **characterized in**, comprising:
reconstructing unit, for reconstructing the trace message object in the SDH coding of a link management protocol Test Message, to make a Trace Message therein to carry information of trace type;
transmitting unit, located on a control plane that actively initiate the layer adjacency, for constructing the trace message object in the process of layer adjacency discovery according to a layer network to be discovered, and transmitting the Trace Message carrying the trace message object to a transport plane, to require the transport plane to conduct transmission in a predetermined form by a trace byte; and
processing unit, for conducting different processes according to the trace type carried in the Trace Message after the Trace Message is received at a receive port of layer adjacency of the transport plane.

10. The verification device according to claim 9, **characterized in**, in the reconstructing unit, the trace message object is constructed by adding a new type to the trace type of the trace message object and using the Trace Message to carry the trace type.

11. The verification device according to claim 9, **characterized in**, the processing unit further used for: when the trace type indicates that connectivity of a regenerator section layer is verified, making the transport plane to ends the transmission of the Trace Message, and making the control plane to verify the connectivity of the regenerator section layer according to the Trace Message.

12. The verification device according to claim 9, **characterized in**, the processing unit further for: when the trace type indicates that connectivity of a multiplex section layer is verified, making the transport plane and the control plane conduct different processes according to the type of the receive port.

13. The verification device according to claim 12, **characterized in**, the processing unit further comprises a judging unit, for judging the type of the receive port, wherein the processing unit used for making the transport plane to ends the transmission of the Trace Message and making the control plane to verify connectivity of a multiplex section layer according to the Trace Message when the type of the receive port is ADM,; and the processing unit used for making the transport plane to transmit the Trace Message to a corresponding downstream node directly when the type of the receive port is REG.

14. The verification device according to claim 9, **characterized in**, the predetermined form is 16-byte multi-frame.

15. The verification device according to claim 9, **characterized in**, the trace byte is J0 byte of a regenerator section layer.
